# EUROPEAN PATENT SPECIFICATION

(11) **EP 4 542 400 B1**
(45) Date of publication and mention of the grant of the patent: **28.10.2026**
(21) Application number: 24199754.3
(22) Date of filing: 11.09.2024
(51) Int. Cl.: G06F 13/10, G06F 9/44, G06F 13/28

(54) **METHOD AND SYSTEM FOR SCALABLE RELIABLE CONNECTION TRANSPORT FOR RDMA**
VERFAHREN UND SYSTEM FÜR SKALIERBAREN ZUVERLÄSSIGEN VERBINDUNGSTRANSPORT FÜR RDMA
PROCÉDÉ ET SYSTÈME DE TRANSPORT DE CONNEXION FIABLE EXTENSIBLE POUR RDMA

(30) Priority: 18.10.2023 US 202318489110
(43) Date of publication of application: 23.04.2025
(60) Divisional application: 26206674.9
(73) Proprietor: Avago Technologies International Sales Pte. Limited, Singapore 768923 (SG)
(72) Inventor: Voloshin, Moshe, Irvine, 92618 (US)
(74) Representative: Dilg, Haeusler, Schindelmann Patentanwaltsgesellschaft mbH

(56) References cited:
- EP-A1- 4 394 613
- WO-A1-2023/040683
- US-A1- 2009 034 551
- US-A1- 2014 310 369
- XINGDA WEI1 ET AL: "KRCORE: A Microsecond-scale RDMA Control Plane for Elastic Computing", 11 July 2022 (2022-07-11), pages 126 - 141, XP061072485, Retrieved from the Internet <URL:http://www.usenix.org/sites/default/files/atc22_full_proceedings_interior.pdf> [retrieved on 20220711]

## Description

### BACKGROUND

The present disclosure relates generally to the field of remote direct memory access (RDMA) and more specifically to transmission of data using queue pairs (QPs).

Typically, a high-performance transport service using an InfiniBand protocol and RDMA over Converged Ethernet (ROCE) is a reliable connection (RC). One of the obstacles to using the RC transport is a high memory footprint. A high memory footprint reduces the capability of a service to use RCs to scale to service a large cluster of computing devices.

WO 2023/040683 is disclosing a pool of shared send queues on FIG. 3.

### SUMMARY

A scalable RC (SRC) can reduce the memory footprint and keep most of the RC features. One or more computer programs can be configured to perform particular operations or actions by virtue of including instructions that, when executed by data processing apparatus, cause the apparatus to perform the actions.

The invention is as defined by the independent claims 1, 8 and 9. Preferred embodiments are according to the dependent claims.

### BRIEF DESCRIPTION OF THE DRAWINGS

FIG. 1 is a diagram that depicts a structure of a queue pair (QP), according to some embodiments.
FIG. 2 is a block diagram depicting a computer networking system with a network system having a remote direct memory access (RDMA) communication network, according to some embodiments.
FIG. 3 is a diagram depicting an RDMA system, according to some embodiments.
FIG. 4 is an architecture diagram of an RDMA system, according to some embodiments.
FIG. 5 is an architecture diagram of an RDMA network computer system, according to some embodiments.
FIG. 6 is a flow diagram of a method to handle a work request (WR) from an application, check if a free shared send queue (SSQ) is available, and post the WR to the SSQ, or store the WR until the free SSQ is available, according to some embodiments.
FIG. 7 is a flow diagram of a method to post WRs that were previously stored in a shadow queue into a newly allocated SSQ, according to some embodiments.
FIG. 8 is a flow diagram of a method to release an SSQ to a free pool, to check if there are connections awaiting an SSQ resource, and to initiate allocation of the SSQ to the next QP awaiting connection if there are connections awaiting the SSQ resource, according to some embodiments.
FIG. 9 is a flow diagram of a method to establish in the memory a pool of SSQs, allocate the SSQ to one or more QPs, and send outgoing messages, according to the invention as defined in claim 1.

### DETAILED DESCRIPTION

The following disclosure provides different embodiments, or examples, for implementing different features of the provided subject matter. Specific examples of components and arrangements are described below to simplify the present disclosure. These are merely examples and are not intended to be limiting. In addition, the present disclosure may repeat reference numerals and letters in the various examples. This repetition is for the purpose of simplicity and clarity and does not in itself dictate a relationship between the various embodiments and configurations discussed.

Typically, when a reliable connection (RC) service is utilized, each process creates a separate reliable connection for each remote process that the process establishes the connection with. Because the RC service is reliable, each RC connection context contains information related to ordering, completions, or retransmission. A reliability context is required on both ends of the RC. A queue pair (QP) refers to a pair of queues used in networking to transfer messages between the endpoints. The QP includes a send queue and a receive queue. The send queue (SQ) holds messages waiting to be transmitted. The receive queue (RQ) holds messages that have been received. Pinning resources in memory refers to keeping certain data or executable code locked in RAM so that the pinned resource cannot be paged out to a disk. For example, pinned memory can be locked. When an RC QP is created, a space for the QP context (e.g., 512B) is reserved in kernel pinned memory.

The RDMA system may have an outgoing read request queue (ORRQ) and an incoming read request queue (IRRQ). The ORRQ is the queue that is responsible for managing and queuing read requests initiated by a device. When a process or application running on the device requests to read data from another device memory, the process or application places a request in the ORRQ. The IRRQ is a queue that can track incoming RDMA read request messages for an RDMA connection. The IRRQ and ORRQ, each having at least 4kB can be pinned in the kernel when the QP supports read or atomic operations.

The IRRQ holds read requests that are received by an RDMA network interface controller (RNIC, which is sometimes referred herein generally as a network interface controller (NIC)). When the remote host system needs to read data from the local host system, it sends a read request that is added to the IRRQ. The local RNIC services these requests by fetching the data from the local host memory and sending it back to the remote host. The ORRQ holds read requests that need to be sent from the local process to the remote host system. The read response packets are sent from the remote host and stored in the local host memory by the RNIC in the address specified in the read request.

A user space refers to the memory area where regular user programs and applications run, e.g., the space where user-mode applications execute. A kernel space refers to the privileged memory area where the core kernel code, kernel extensions, drivers, and/or kernel processes run. RQ memory can be allocated, pinned, and mapped to a user space (that is reserved for a particular process), and some receive work queue elements (WQEs) (e.g., buffers) can be posted to the queue. The SQ memory can be allocated, pinned, and mapped to the user space. The SQ can be used when the application requires communication with the peer process and posts a work request (WR). A single RC QP with RQ may occupy at least 36kB of pinned memory per QP with a relatively small number of WQEs for SQ or RQ. The number of the WQEs for the SQs or the RQs can grow higher if sizes of the SQ or the RQ increase.

When the RC QP with a peer is created, the above structures (e.g., the SQ and RQ) are allocated and the system can consume host memory of fixed size SQs or RQs depending on the application. When the QP is not in use, the QP is typically not destroyed because the QP can be used the next time when the QP is needed. The operation of destroying and creating QPs can be computationally expensive, can take a long time, and can involve significant CPU resources and context switches between the kernel and the user space on both ends of the RC communication. An application such as a message passing interface (MPI), for example, limits the total number of the RC QPs it creates because the QPs can consume a significant CPU memory. When the RC QPs are created, the amount of memory the RC QPs allocate is fixed, regardless of how often the QPs are used.

Typically, an unreliable datagram (UD) can have a more scalable service in comparison to the RC and can require only a single QP per process. The single QP can communicate with any other process in the cluster. WRs for the UD QP can specify the destination address and the remote QP identification or index. The UD service is not reliable and does not wait for acknowledgement notifications to maintain progress information, the progress is made when the transmitted message is handled by the device. The UD can support messages that have a single packet size. An application using the UD QP needs to manage reliability to ensure messages sent to a peer were received. The size of the host memory for the UD QPs is relatively small. When a process sends large messages, the application needs to divide the sent message into multiple WQEs, where each WQE has the size of a single maximum transfer unit (MTU). The MTU is an attribute of the link layer that specifies a maximum allowable packet size. When a process sends messages to multiple destination processes, the messages can be serialized unless the division or fragmentation is performed in interleaving manner between messages.

An extended reliable connection (XRC) can refer to an extension type of the RC. The XRC can reduce the number of resources required for communication. The XRC uses a shared receive queue (SRQ) instead of the RQ. The SRQs can refer to hardware queues implemented in network controllers or adapters that enable incoming network packets to be distributed across multiple protocol processing threads or CPU cores. The SRQ can be a message queue that allows multiple receiving processes to pop (or read) messages from it. The term "pop" can indicate pulling an element from, e.g., a queue. When the SRQ is utilized, all nodes can receive messages using the same queue. Using a shared queue can simplify architecture and reduce the number of required queues. A subscriber is an application that registers an interest in receiving messages from a shared queue. Multiple recipients can subscribe to one shared queue instead of several individual queues.

The XRC splits the QP context into two parts: an initiator QP (INIQP) and a target QP (TGTQP). Each local process has an INIQP associated with each destination node (instead of each destination process in the RC). The process posts a WR on an INIQP. The WR specifies the TGTQP on the remote node. The reliability context on the two ends is maintained in the INIQP and the TGTQP. There is a TGTQP for a source process and each source node in the system. If N denotes a number of nodes and P denotes a number of processes, then on each node there are N*P number of INIQPs for N*P number of destination processes and N*P number of TGTQPs for N*P number of source processes. In comparison, the number of QPs having the RC service is N*P². Having such queues in the XRC, a process communicating with more than one remote process on the same node serializes the transmissions toward the remote processes. The XRC can support operations supported in the RC.

Typically, a dynamic connection (DC) provides all operations supported in the RC and has a scaling similar to the UD service. For example, there is only a single INIQP for each local process to send messages to all other processes on the system, and only a single TGTQP per local process exists to receive messages from any process on the system. The DC can use the SRQ instead of the RQ, with one SRQ per process. Because the DC does not maintain a reliability context for all possible connections, each time a process starts communication with a remote process the two ends establish a new reliability context with sequencing information. Sending messages from one process to multiple processes are serialized in the DC. When switching between messages that have destinations to different peers, e.g., the message A to process n and message B to process m, acknowledgement notification for message A is received before starting transmission of message B. Each node in the DC has at least one global responder to respond to connection requests because a busy TGTQP can be currently responding to an existing connection. The DC can use concurrency higher than one (1), e.g., a process can create more than one INIQP and the process can manage sending messages to more than one destination process concurrently to decrease the level of serialization. Because there is only one TGTQP per process, the messages from some peers can be delayed because of a rejection for the connection request when the TGTQP is already connected.

The DC can scale effectively because the DC consumes few connection resources. The DC has a relatively good performance because the DC will not experience cache thrashing. Cache thrashing is characterized by the frequent and inefficient swapping of data within the cache memory of a computer system that results in a degradation of system performance. Similarly to the XRC, the DC experiences serialization, blocking by large messages, delaying delivery of subsequent messages due to congestion toward the destination of the current message. The DC connects, disconnects, and waits for acknowledgement regarding the current message before switching to another destination. For example, there can be a large read operation from one destination followed by a write operation to another destination. The write operation cannot progress until completion of a response to a large read operation. A slow or busy read responder can cause further delays. The DC can have a penalty for switching between the destinations when one process sends the requests to multiple processes, and this penalty can be higher for a smaller message size.

Typically, the scalable RC (SRC) employs a dynamic association of resources to the QPs. For example, when the SRC is used, a small set of global resources is pinned and statically allocated. However, such global resources are used as needed by a large number of connections, e.g., the QPs. The reliability context of the SRC configuration is maintained for each peer process and the total number of the QP contexts is substantially the same as in the RC configuration. If N denotes a number of nodes and P denotes a number of processes, the SRC requires 512B per QP and grows at a rate of N*P². The other data structures are not allocated per QP and they grow on the order of one (1) (e.g., constant) for the IRRQ and ORRQ and the order of P for the SQs. One SRQ per process can be used, so the number of RQs can be reduced to the order of P. One completion queue (CQ) per process can be used for completion of all SQs. Since the CQ is used for completions from multiple QPs, a size of the CQ can be larger than the size of the CQ when the CQ per QP is employed. The application controls the size of the CQ and can also resize the size of the CQ as needed. For example, such operations can be performed using the RC in Open MPI^{®} (such as those supplied by Software in the Public Interest, Inc. of New York, the U.S.A.). The SSQ can be used when the process has transmissions toward the destination process and posts WRs. The user library allocates a limited number of pinned resources of the SSQs per process and uses them as needed for the QPs that have transmission work to execute. When a QP has no outstanding WQEs, the resource can be released. The term "allocate" can refer to a process of setting aside or assigning resources, such as memory, CPU time, storage, or network bandwidth, to specific tasks, processes, or components within a system. The term "release" refers to the action of making a previously allocated or reserved resource available for other processes or applications to use. For example, the release of a resource can involve freeing up the resource, so that the resource is no longer dedicated to a specific task or program and can be used by other processes as needed.

A pool of allocated resources in the QP can refer to a set of resources that are available to be used by the QP. A global pool of the IRRQ entries can be allocated (where each entry holds one incoming read request) and used as needed. The ORRQ is allocated together with the SSQ when a process submits a WR to a certain connection with a peer (e.g., to a QP). The user library creates a pinned ORRQ for each SSQ, which the user library creates. The ORRQ is allocated to the QP when the SSQ is allocated to a QP. The IRRQ entry is needed when a read or atomic request is received. The RNIC hardware allocates an IRRQ entry from the pool and stores the read or atomic information in the IRRQ. The RNIC can use this information to transmit responses to the stored requests. If there is no IRRQ entries available, a negative acknowledgement (NAK) for receiver not ready (RNR) is sent responsive to the incoming read or atomic request. The requester can handle the RNR similarly to how an RNR for send requests is handled. For example, retransmission can be issued after waiting the time specified in the RNR NAK. After responses to all requests have been sent, the RNIC can release the IRRQ entry back to the pool.

A swappable resource refers to a portion of data or code that can be moved in and out of physical memory (e.g., RAM) and secondary storage (e.g., a hard disk drive (HDD) or solid-state drive (SSD)) as needed. When a program needs to access a particular resource, and that resource is not currently in the physical memory, the operating system (OS) can swap out some other less-used resources from the physical memory to make space for the required resource. The swapped-out resources can be temporarily stored in the secondary storage, while the needed resource is brought into the physical memory. The swapping process allows the system to handle more data and code than the physical memory can accommodate.

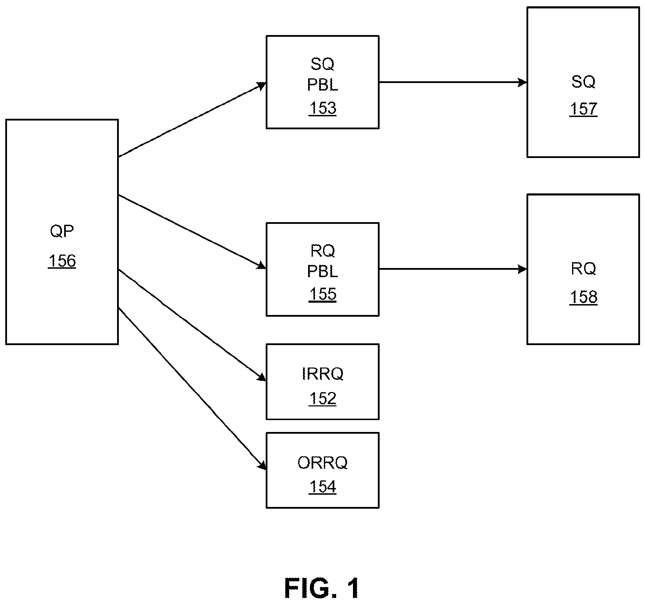

Referring now to FIG. 1, a diagram that depicts a structure of a QP 156 is illustrated. The QP 156 can refer to a data structure used, for example, in InfiniBand networks to facilitate communication between processes. The QP 156 can include two queues: a send queue (SQ) 157 and a receive queue (RQ) 158. The QP 156 can be created on each node that communicates with other nodes. The QP 156 allows a process on one node to send messages to and receive messages from a process on another node. When an application communicates, the application posts work requests (WRs) to the SQ 157 or the RQ 158 of its local QP 156. For example, the InfiniBand hardware can handle transferring the messages between the connected QPs 156.

The QP 156 can include the following associated components: the SQ 157, the RQ 158, and the completion queue (CQ). In some embodiments, the QP 156 can include the IRRQ 152 and the ORRQ 154. A QP context (QPC) can have various information such as a destination QP 156, a destination IP address, a sequence number, and a relevant communication state and pointers to the aforementioned components. The term "pointer" can refer to a data type used to store memory addresses. The pointer can be a variable that "points" to a location in the computer memory, providing access to and operating with data stored at that location. Pointers can be used for various tasks, including dynamic memory allocation, data structures, and memory management.

The SQ 157 holds work requests that are transformed by a user library software to WQEs to send messages to the remote end of the QP 156. The send queue may include send WRs, RDMA read WRs, and RDMA write WRs. The RQ 158 holds receive work queue elements that are used when send messages have been received from the remote end of the QP 156. The completion queue elements (CQEs) are data structures that have information on a work request that has been completed, e.g., the CQ elements may include status information. The CQ elements are placed on the CQ.

In some embodiments, the QP 156 that is active or operational may include the following resources pinned in a memory of the computing system: a send queue page buffer list (SQ PBL) 153 and SQ 157 that includes send WQEs, a receive queue page buffer list (RQ PBL) 155 and RQ 158 that includes receive WQEs, an IRRQ 152, and an ORRQ 154. Other QP data structures used by device driver and user library software (not shown) can be moved in and out (e.g., referred to sometimes as swapping) of physical memory and secondary storage. A page buffer list refers to an array of pointers to memory pages used to store sending and receiving WQEs. Typically, the pages are allocated and pinned upfront, by the device driver so that the device (e.g., hardware) can have access to the pages. The WQEs have pointers to buffers, which include application data to be sent or memory location to store incoming messages. The network adapter can later retrieve from or write to these buffers for transmission and reception, respectively.

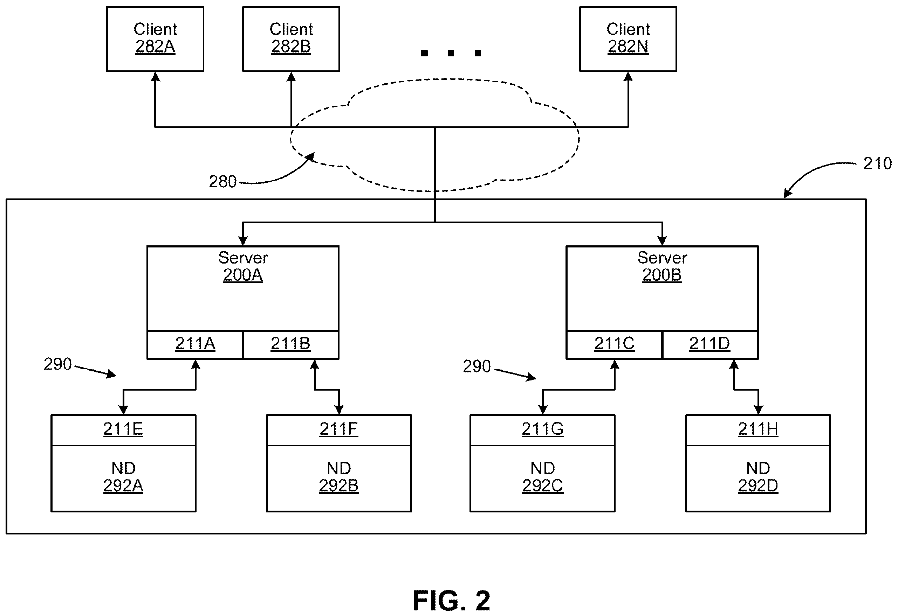

Referring now to FIG. 2, a block diagram illustrates a computer networking system with a network system 210 having an RDMA communication network 290 in accordance with some embodiments. One or more remote client computers 282A-282N may be coupled in communication with the one or more servers 200A-200B of the network system 210 by a local area network (LAN) 280.

The term "coupled," and variations thereof includes the joining of two members directly or indirectly to one another. The term "electrically coupled" and variations thereof includes the joining of two members directly or indirectly to one another through conductive materials (e.g., metal or copper traces). Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The network system 210 includes one or more server devices 200A-200B and one or more NDs 292A-292D coupled in communication together by the RDMA communication network 290. RDMA message packets are communicated over wires or cables of the RDMA communication network 290, one or more server devices 200A-200B, and one or more NDs 292A-292D. To support the communication of RDMA message packets, the one or more servers 200A-200B may each include one or more RDMA network interface controllers (RNICs or sometimes generally referred to as network interface controllers (NICs)) 211A-211D (sometimes referred to as RDMA host channel adapters), also referred to herein as network communication computer system(s) 211.

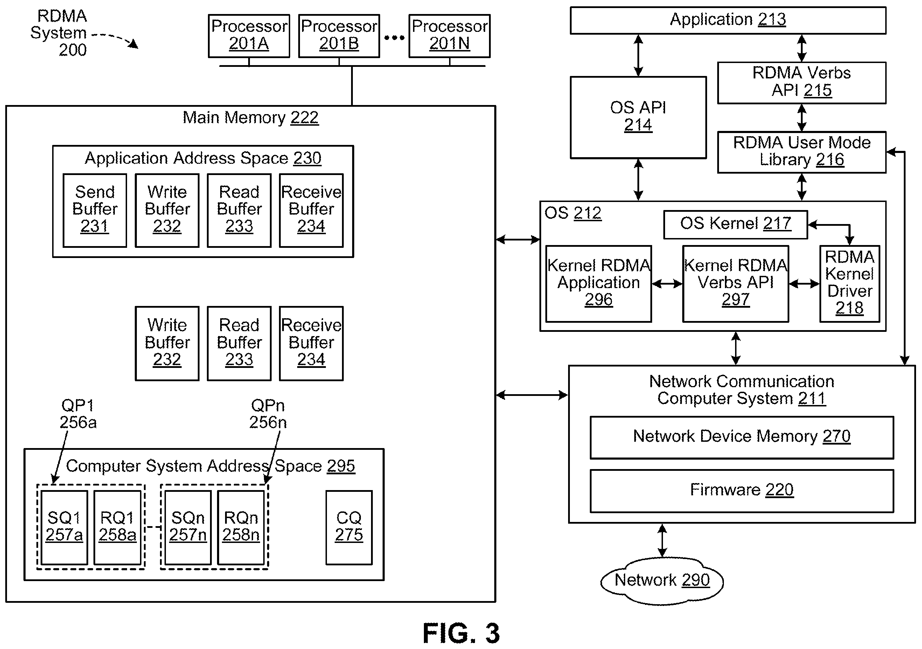

Referring now to FIG. 3, a block diagram illustrates an RDMA system 200 that can be instantiated as the server devices 200A-200B of the network system 210, in accordance with some embodiments. In some embodiments, the RDMA system 200 is a server device. In some embodiments, the RDMA system 200 can be any other suitable type of the RDMA system, such as, for example, a client device, a network device, a storage device, a smart appliance, a sensor device, a vehicle, and the like. The client devices may include, for example, a personal computer, a laptop, a tablet, a smartphone, etc. The network devices may include, for example, a router, a switch, a firewall, an access point, a modem, an ethernet card, a load balancer, a domain name system (DNS) server, etc. The storage devices may include, for example, a hard disk drive (HDD), a solid-state drive (SSD), a hybrid drive, a network attached storage (NAS), an optical disc, a redundant array of independent disks (RAID), a storage area network (SAN), a memory card, etc. The smart appliances may include, for example, a smart thermostat, a smart speaker, a smart lock, a smart light, a smart TV, etc. The sensor devices may include, for example, a temperature sensor, a motion sensor, a proximity sensor, a light sensor, a global positioning system (GPS) sensor, etc.

The RDMA system 200 is an RDMA-enabled information processing apparatus that is configured for RDMA communication to transmit and receive RDMA message packets. The RDMA system is designed, implemented and/or configured to communicate messages using any type and form of RMDA protocol, such as any standardized RMDA protocol specifications and any extensions thereto. The RMDA system is designed/implemented and/or configured to provide read and write services for data transfers to and from applications.

The RDMA system 200 includes a plurality of processors 201A-201N, a network communication computer system 211, and a main memory 222 communicatively coupled together. Any of the processors 201A-201N can execute instructions of an operating system (OS) 212, an application 213, an Operating System API 214, a user RDMA Verbs API 215, and an RDMA user-mode library 216 (a user-mode module). The OS 212 includes software instructions of an OS kernel 217, an RDMA kernel driver 218, a kernel RDMA application 296, and a kernel RDMA verbs API 297.

The main memory 222 includes an application address space 230, and a computer system address space 295. The application address space 230 is accessible by user-space processes. The computer system address space 295 is accessible by user-space and kernel-space processes and the computer system firmware module 220.

The application address space 230 includes buffers 231 to 234 used by the application 213 for RDMA transactions. The buffers include a send buffer 231, a write buffer 232, a read buffer 233, and a receive buffer 234.

An illustrative QP 256 is shown in FIG. 3. For example, the RDMA system 200 includes two queue pairs: a QP 256a and a QP 256n, which are generally denoted as the QPs 256. In some embodiments, another number of the QPs may be used in the RDMA system 200, e.g., more than two QP or less than two QPs. Although FIG. 3 illustrates a certain number of the QPs, implementations may use any number of the QPs, including a much larger number of the QPs than shown. The QPs 256a and 256n may be identical to or similar in some respect to the QP 156 of FIG. 1. Accordingly, like features may be designated with like reference numerals, with the leading digits incremented to "2". Relevant disclosure set forth above regarding similarly identified features thus may not be repeated hereafter. Moreover, specific features of the QP 256 may not be shown or identified by a reference numeral in the drawings or specifically discussed in the written description that follows. However, such features may clearly be the same, or substantially the same, as features depicted in other embodiments or described with respect to such embodiments of the QP 156. Accordingly, the relevant descriptions of such features apply equally to the features of the QP 256. Any suitable combination of the features and variations of the same described with respect to the QP 156 can be employed with the QP 256, and vice versa. This pattern of disclosure applies equally to further embodiments of the QP 256 depicted in subsequent figures and described hereafter.

The queue pair 256a includes a send queue 257a, and a receive queue 258a. In some embodiments, the RDMA completion queue (CP) 275 is used in connection with the send queue 257a and the receive queue 258a. Similarly, the queue pair 256n includes a send queue 257n and a receive queue 258n.

In some embodiments, the application 213 creates the queue pairs 256a and 256n by using the RDMA verbs application programming interface (API) 215 and the RDMA user mode library 216. During creation of the queue pair 256a, the RDMA user mode library 216 creates the computer system send queue 257a and the computer system receive queue 258a in the computer system address space 295.

In some embodiments, the RDMA verbs API 215, the RDMA user-mode library 216, the RDMA kernel driver 218, the kernel RDMA verbs API 297, and the network device firmware module 220 provide RDMA functionality in accordance with the InfiniBand Architecture (IBA) specification.

The RDMA verbs API 215 implements RDMA verbs, the interface to an RDMA enabled network interface controller. The RDMA verbs can be used by user-space applications to invoke RDMA functionality. The RDMA verbs typically provide access to RDMA queuing and memory management resources, as well as underlying network layers.

In some embodiments, the RDMA verbs provided by the RDMA Verbs API 215 are RDMA verbs that are defined in the InfiniBand Architecture (IBA) specification. RDMA verbs can include the following verbs: Create Queue Pair, Modify Queue Pair, Destroy Queue Pair, Post Send Request, and Register Memory Region.

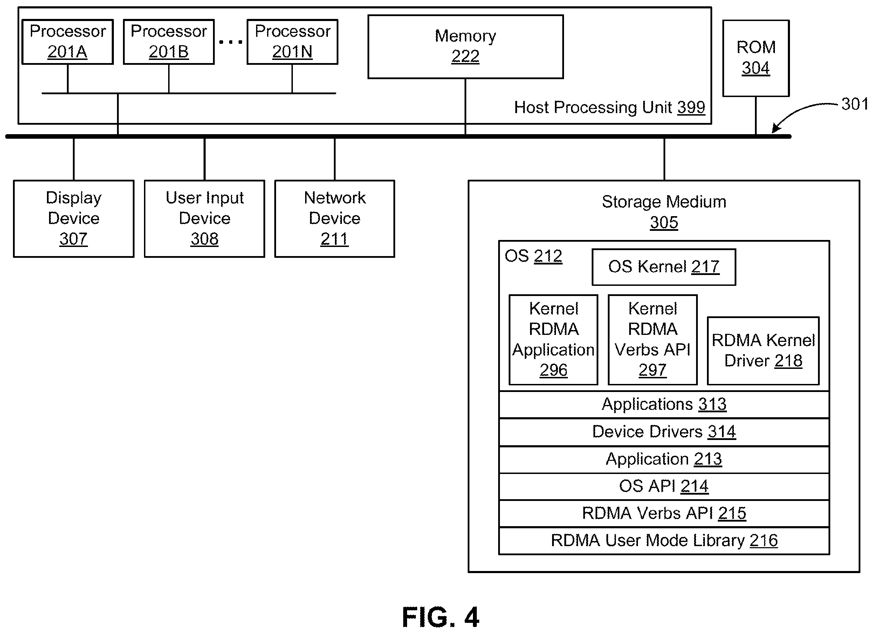

FIG. 4 is an architecture diagram of the RDMA system 200 in accordance with some embodiments. In some embodiments, the RDMA system 200 is a server device. The bus 301 interfaces with the processors 201A-201N, the main memory 222 (e.g., a random access memory (RAM)), a read only memory (ROM) 304, a processor-readable storage medium 305, a display device 307, a user input device 308, and the network device 211 of FIG. 3. The processors 201A-201N may take various forms, such as ARM processors, X86 processors, and the like. In some embodiments, the RDMA system 200 includes at least one of a central processing unit (CPU) and a multi-processor unit (MPU).

The processors 201A-201N and the main memory 222 form a host processing unit 399. In some embodiments, the host processing unit includes one or more processors communicatively coupled to one or more of the RAM, ROM, and machine-readable storage medium. In some embodiments, the one or more processors of the host processing unit receive instructions stored by the one or more of the RAM, ROM, and machine-readable storage medium via a bus. In some embodiments, the one or more processors execute the received instructions. In some embodiments, the host processing unit is an application-specific integrated circuit (ASIC) device. In some embodiments, the host processing unit is a system-on-chip (SOC) device. In some embodiments, the host processing unit includes one or more of the RDMA kernel driver 218, the kernel RDMA verbs API 297, the kernel RDMA application 296, the RDMA verbs API 215, and the RDMA user mode library 216.

The network computer system 211 provides one or more wired or wireless interfaces for exchanging data and commands between the RDMA system 200 and other devices, such as a remote RDMA system. Such wired and wireless interfaces include, for example, a universal serial bus (USB) interface, Bluetooth interface, Wi-Fi interface, Ethernet interface, near field communication (NFC) interface, and the like.

Machine-executable instructions in software programs (such as an OS 212, application programs 313, and device drivers 314) are loaded into the memory 222 (of the host processing unit 399) from the processor-readable storage medium 305, the ROM 304 or any other storage location. During execution of these software programs, the respective machine-executable instructions are accessed by at least one of processors 201A-201N (of the host processing unit 399) via the bus 301, and then executed by at least one of processors 201A-201N. Data used by the software programs are also stored in the memory 222, and such data is accessed by at least one of processors 201A-201N during execution of the machine-executable instructions of the software programs.

The processor-readable storage medium 305 may be one of (or a combination of two or more of) a hard drive, a flash drive, a DVD, a CD, an optical disk, a floppy disk, a flash storage, a solid state drive, a ROM, an EEPROM, an electronic circuit, a semiconductor memory device, and the like. The processor-readable storage medium 305 includes application programs 313, device drivers 314, and the OS 212, the application 213, the OS API 214, the RDMA verbs API 215, and the RDMA user mode library 216 of FIG. 3. The OS 212 includes the OS kernel 217, the RDMA kernel driver 218, the kernel RDMA application 296, and the kernel RDMA verbs API 297 of FIG. 3.

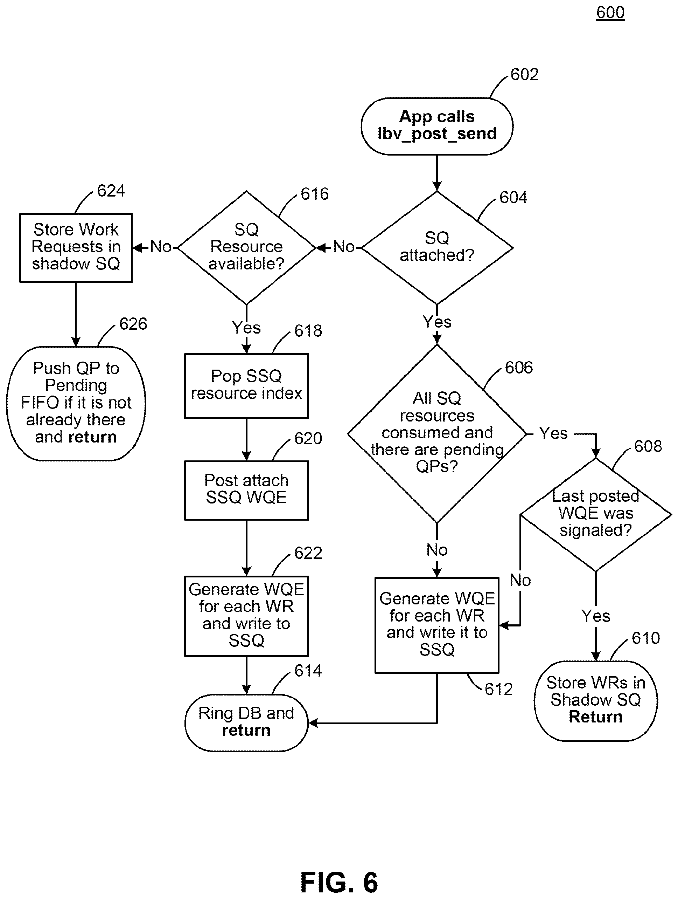

The RDMA kernel driver 218 includes instructions that are executed by the host processing unit 399 to perform the processes described below with respect to FIGS. 6 to 9. In some embodiments, the RDMA user mode library 216 includes instructions that are executed by the host processing unit 399 to perform the processes described below with respect to FIGS. 6 to 9. More specifically, the RDMA kernel driver 218 includes instructions to control the host processing unit 399 to provide the computer system 211 with computer system commands and in-band RDMA WQEs.

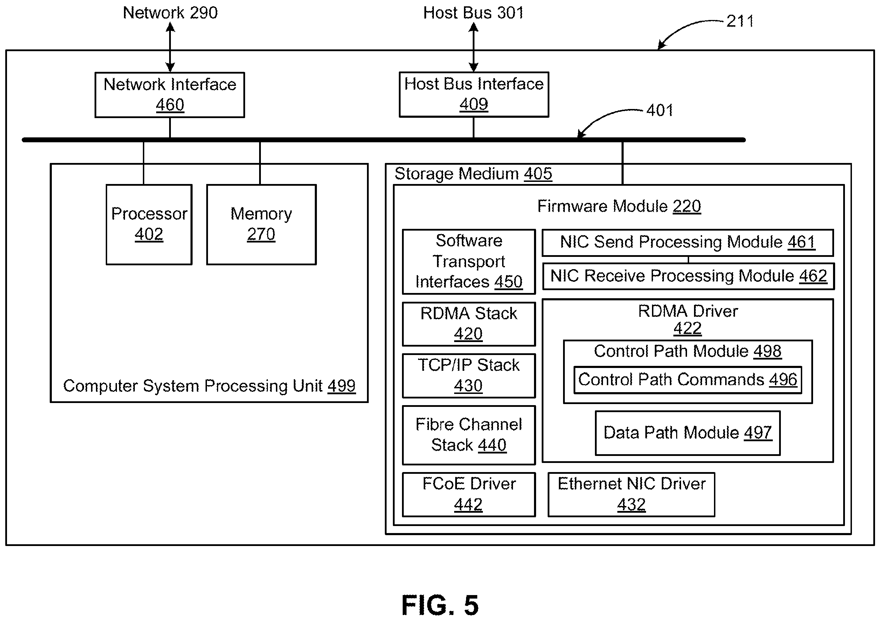

As described below in relation to FIG. 5, the computer system firmware module 220 includes a control path module 498 that includes instructions to process computer system commands provided to the computer system 211 by the host processing unit 399. Computer system commands are processed by an RDMA control path of the computer system 211. In some embodiments, the host processing unit 399 can provide computer system commands to the computer system 211 regardless of queue pair states of queue pairs of the computer system 211.

The computer system firmware module 220 also includes a data path module 497 that includes instructions to process RDMA WQEs provided by the host processing unit 399 to the computer system 211 via a queue pair (e.g., one of the queue pairs 256a and 256n of FIG. 3) of the computer system 211. The RDMA WQEs include in-band RDMA WQEs generated by execution of instructions of an RDMA driver (e.g., one of the RDMA kernel driver 218 and the RDMA user mode library 216) by the host processing unit 399 and application RDMA WQEs generated by execution of instructions of an application (e.g., one of the applications 213 and the kernel RDMA application 296 of FIG. 3) by the host processing unit 399.

In some embodiments, in-band RDMA WQEs include data that can be processed by an RDMA data path of the computer system 211 to effect configuration of the computer system 211. In some embodiments, the host processing unit 399 can provide in-band WQEs to the computer system 211 via a queue pair that is in one of the initialized (INIT) state, the ready to receive (RTR) state, and the ready to send (RTS) state. Similarly, the RDMA data path of the computer system 211 can process in-band RDMA WQEs received via a queue pair that is in one of the initialized (INIT) state, the ready to receive (RTR) state, and the ready to send (RTS) state. In some implementations, the host processing unit 399 cannot provide in-band WQEs to the computer system 211 via a queue pair that is in a RESET state.

In some embodiments, the RDMA user mode library 216 includes one or more of the instructions described above as being included in the RDMA kernel driver 218.

An architecture diagram of the RDMA network computer system 211 of the RDMA system 200 is provided in FIG. 5. In some embodiments, the RDMA network computer system 211 is a network communication computer system that is constructed to be included in a server device. In some embodiments, the RDMA network device is a network communication computer system 211 that is constructed to be included in one or more different types of RDMA systems, such as, for example, client devices, network devices, smart appliances, storage devices, sensor devices, vehicles, and the like.

The bus 401 interfaces with a processor 402, a random access memory (RAM) 270, a processor-readable storage medium 405, a host bus interface 409, and a network interface 460.

The processor 402 may take many forms, such as, for example, a central processing unit (CPU), a multi-processor unit (MPU), an ARM processor, and the like.

The processor 402 and the memory 270 form a computer system processing unit 499. In some embodiments, the computer system processing unit 499 includes one or more processors communicatively coupled to one or more of the RAM, ROM, and machine-readable storage medium. In some embodiments, the one or more processors of the computer system processing unit 499 receive instructions stored by the one or more of the RAM, ROM, and machine-readable storage medium via a bus. In some embodiments, the one or more processors execute the received instructions. In some embodiments, the computer system processing unit 499 is an ASIC (Application-Specific Integrated Circuit). In some embodiments, the computer system processing unit 499 is a SoC (System-on-Chip). In some embodiments, the computer system processing unit 499 includes the firmware module 220. In some embodiments, the computer system processing unit 499 includes the RDMA driver 422. In some embodiments, the computer system processing unit 499 includes one or more of the control path module 498 and the data path module 497. In some embodiments, the computer system processing unit 499 includes the RDMA stack 420. In some embodiments, the computer system processing unit 499 includes the software transport interfaces 450.

The network interface 460 provides one or more wired or wireless interfaces for exchanging data and commands between the network communication computer system 211 and other devices, such as another network communication computer system. Such wired and wireless interfaces include, for example, a universal serial bus (USB) interface, Bluetooth interface, Wi-Fi interface, Ethernet interface, near field communication (NFC) interface, and the like.

The host bus interface 409 provides one or more wired or wireless interfaces for exchanging data and commands via the host bus 301 of the RDMA system 200. In some embodiments, the host bus interface 409 is a PCIe host bus interface.

Machine-executable instructions in software programs are loaded into the memory 270 (of the computer system processing unit 499) from the processor-readable storage medium 405, or any other storage location. During execution of these software programs, the respective machine-executable instructions are accessed by the processor 402 (of the computer system processing unit 499) via the bus 401, and then executed by the processor 402. Data used by the software programs are also stored in the memory 270, and such data is accessed by the processor 402 during execution of the machine-executable instructions of the software programs.

The processor-readable storage medium 405 may be one of (or a combination of two or more of) a hard drive, a flash drive, a DVD, a CD, an optical disk, a floppy disk, a flash storage, a solid state drive, a ROM, an EEPROM, an electronic circuit, a semiconductor memory device, and the like. The processor-readable storage medium 405 includes the firmware module 220. The firmware module 220 includes instructions to perform the processes described below with respect to FIGS. 6 to 9.

In some embodiments, the firmware module 220 includes software transport interfaces 450, an RDMA stack 420, an RDMA driver 422, a TCP/IP stack 430, an Ethernet RNIC driver 432, a Fibre Channel (FC) stack 440, an FCoE (Fibre Channel over Ethernet) driver 442, an RNIC send queue processing module 461, and an RNIC receive queue processing module 462.

In some implementations, RDMA verbs are implemented in software transport interfaces 450. In some embodiments, the RDMA protocol stack 420 is an InfiniBand protocol stack. In some embodiments the RDMA stack 420 handles different protocol layers, such as the transport, network, data link, and physical layers.

In some embodiments, the RDMA network device 211 is configured with full RDMA offload capability, which means that both the RDMA protocol stack 420 and the RDMA verbs (e.g., included in the software transport interfaces 450) are implemented in the hardware of the RDMA network device 211. In some embodiments, the RDMA network device 211 uses the RDMA protocol stack 420, the RDMA driver 422, and the software transport interfaces 450 to provide RDMA functionality. The RDMA network device 211 uses the Ethernet RNIC driver 432 and the corresponding TCP/IP stack 430 to provide Ethernet and TCP/IP functionality. The RDMA network device 211 uses the Fibre Channel over Ethernet (FCoE) driver 442 and the corresponding Fibre Channel stack 440 to provide Fibre Channel over Ethernet functionality.

In operation, the RDMA network device 211 communicates with different protocol stacks through specific protocol drivers. In some embodiments, the RDMA network device 211 communicates by using the RDMA stack 420 in connection with the RDMA driver 422, communicates by using the TCP/IP stack 430 in connection with the Ethernet RNIC driver 432, and communicates by using the Fibre Channel stack 440 in connection with the Fibre Channel over the Ethernet (FCoE) driver 442.

In some implementations, the RDMA driver 422 includes a control path module 498 and a data path module 497. The control path module 498 includes instructions to process computer system commands 496 provided to the computer system 211 by the host processing unit 399. In some implementations, the control path module processes computer system commands (control path commands) 496 by using control path hardware. In some implementations, the computer system 211 receives computer system commands 496 from the host processing unit 399 via the host bus interface 409.

The control path module 498 includes instructions for processing: an "INIT state create queue pair" computer system command to create an RDMA queue pair 256 in an initialized (INIT) state; a "RESET state create queue pair" computer system command to create an RDMA queue pair 256 in a RESET state; an "INIT state queue pair state transition" computer system command to transition the RDMA queue pair 256 from the RESET state to the initialized state; an "RTS state queue pair state transition" computer system command to provide RDMA transmit operation information and RDMA receive operation information for the RDMA queue pair 256 from the host processing unit 399 to the computer system 211 and transition the RDMA queue pair 256 from the initialized state to a ready to send (RTS) state; an "RTR state queue pair state transition" computer system command to receive RDMA receive operation information for the RDMA queue pair 256 at the computer system and transition the RDMA queue pair 256 from the initialized state to a ready to receive (RTR) state; a "recycle queue pair state transition" computer system command to transition the RDMA queue pair 256 from an ERROR state the RESET state; a "recycle queue pair state transition" computer system command to transition the RDMA queue pair 256 from the ERROR state the INIT state; an "ERROR queue pair state transition" computer system command to transition the RDMA queue pair 256 from the INIT state the ERROR state; an "ERROR queue pair state transition" computer system command to transition the RDMA queue pair 256 from the RTR state the ERROR state; an "ERROR queue pair state transition" computer system command to transition the RDMA queue pair 256 from the RTS state the ERROR state.

The data path module 497 includes instructions to process RDMA WQEs provided by the host processing unit 399 to the computer system 211 via a QP 256 of the computer system 211. The RDMA WQEs include in-band RDMA WQEs generated by execution of instructions of an RDMA kernel or user space driver 218 (e.g., one of the RDMA kernel driver 218 and the RDMA user mode library 216) by the host processing unit 399, and application RDMA WQEs generated by execution of instructions of an application (e.g., one of the applications 213 and the kernel RDMA application 296 of FIG. 3) by the host processing unit 399. In some implementations, the computer system 211 receives RDMA WQEs from the host processing unit 399 via the host bus interface 409.

In some implementations, the data path module processes RDMA WQEs by using data path hardware. In some implementations, the data path hardware is constructed to provide increased speed and performance via the data path, as opposed to the control path.

A reference is now made to architecture of a context of the QP 156 illustrated in FIG. 1. In some embodiments, the QP context can be split into two parts, each with a unique index: a scalable or shared SQ (SSQ) and a QP 156. A pool of the SSQs can be set in the memory of a computing system. The term "set" can refer to the process of creating and initializing the necessary communication structures and resources (e.g., the SSQs or the pool of the SSQs) for internal process or network communication, where internal process refers to communication and data exchange that occurs between different processes within the computing system.

In some embodiments, a first QP of a plurality of QPs can be set responsive to a first process in a user space, where a first resource set of the first QP allocated from the memory in a kernel space. In some embodiments, a second QP of the plurality of QPs can be set responsive to a second process in the user space, where a second resource set of the second QP allocated from the memory in the kernel space. In some embodiments, a pool comprising a SSQ can be set such that the SSQ is shared by the first QP and the second QP.

The SSQ can be a limited resource having an index SSQ_ID. The SSQ Context (SSQC) includes a pointer to the physical pinned memory where the WQEs are posted. The SSQ context includes a reference to the ORRQ memory and its indices. In some embodiments, the ORRQ 154 is allocated when SSQ is allocated.

In some embodiments, a QP context (QPC) can include other QPC elements including reference to destination address, destination QPN, reliability and congestion contexts, and the SSQ index. The IRRQ 152 can be one per read request, the IRRQ entries can be dynamically allocated as needed based on incoming read or atomic operations.

From the perspective of verbs, there can be a QP number which has an association to an index of the QP (QP_ID) according to some embodiments. For example, Thor3^{®} driver (such as those supplied by Broadcom Corporation of Irvine, California) and user library can control the SSQ and attach the SSQ to a QP 156 as needed and detach the SSQ when the SSQ is not in use.

In some embodiments, the user library may post the WQEs directly to the SSQ or may store the work request (WR) posted by an upper layer into a shadow SQ (e.g., a software construct per QP 156) and later convert them to the WQEs and post them to the SSQ.

In some embodiments, the SSQ has a doorbell (DB) operation to update a producer index. The DB triggers the hardware to read the WQEs from the SSQ. The SSQ can contain an "attach WQE" command that contains the QP_ID. When the hardware reads the "attach WQE" command, it updates the QP_ID in the SSQC and the SSQ_ID in the QPC to indicate a reattachment of the SSQ to a new QP 156.

In some embodiments, the hardware uses scheduling queues to schedule the SSQs (instead of the QPs 156) for transmissions. The SSQ_ID and the last QP_ID associated with the SSQ_ID are stored in a scheduling queue element. When the SSQ is popped from the scheduling queue, both SSQC and QPC are fetched. The WQE is read from the SSQ and if the QP_ID of the WQE is different from the QP_ID stored in a transmit scheduler, then the SSQ having the new QP_ID is pushed to the scheduling queue to be served in the future. The term "push" can indicate adding an element to, e.g., a queue.

In some embodiments, there can be an occasional delay in executing the SSQ work when switching the index of the QP. The software manages a free pool of the SSQs dedicated to each process. When acknowledgement is received, the RNIC fetches the QPC and the currently associated SSQC to generate completions for the WQEs of the SSQ. As described herein, the QP 156 and the CONN can be used interchangeably and refer to a process-to-process communication channel.

In some embodiments, when a process creates a QP 156, an SQ 157, an RQ 158, or SRQ, they are created on both peers. In parallel execution on multiple processes, for example, in MPI, there is a state in the application where one process sends a message to another process. Both processes can reach such state in the application program, where one process can post a send buffer 231 and the other process can post a receive buffer 234. In some embodiments, the sending process reaches the execution state before the receiving process, and the message can arrive at the receiving node before the receive buffer 234 is posted. If the RQ buffers were not posted beforehand, the receiver can send the RNR that requires a wait time and retransmission. The receive buffers 234 may be posted at the time of creating the QP 156, and more buffers can be posted ahead of their use when the RQ 158 gets close to an empty status.

In some embodiments, an RQ resource may be present, the RQ resource may have receive WQEs, which can require a relatively large pinned memory when there is a large number of QPs 156. In some embodiments, to keep the memory footprint small, the SRQ is used because the RQ 158 cannot be a global resource that is allocated as needed. In some embodiments, the MPI and middleware library can use the SRQ, and not RQ 158, to limit use of resources, and the process can post the receive WQEs to the SRQ beforehand.

In some embodiments, the maximum number of the IRRQ entries that one QP 156 can consume is the maximum outstanding reads allowed on the QP 156 (e.g., which is returned to the application query). A relatively small number of the QPs 156 sending a read request to the RNIC can consume the entire pool of the IRRQ entries. When the IRRQ entries pool is depleted, incoming read requests are responded to by the RNR NAK with a specified time period allowed for retrying the read request. The RNIC moderates the RNR time based on the number of outstanding response bytes on the QP 156 associated with the incoming read request and the total number of the QPs 156 awaiting the IRRQ resource (e.g., the number of the QPs 156 responded to with the RNR on the read request).

First in first out (FIFO) is a data structure that operates on the principle of preserving the order of elements based on their arrival or insertion time. In the FIFO structure, the element that is inserted or enqueued first is the element that will be removed or dequeued first. In some embodiments, to reduce unnecessary release of the SSQ resource, that can be needed again, the user library uses three FIFO structures: (i) a free SSQ FIFO that includes the SSQ resources that are not attached to any QP 156; (ii) pending QPs FIFO that includes the QPs 156 to which WRs are posted, but for which no SSQ resource was available; and (iii) release candidates FIFO that includes the QPs 156 having an allocated SSQ, but that has reached an empty SQ 157 at a certain time.

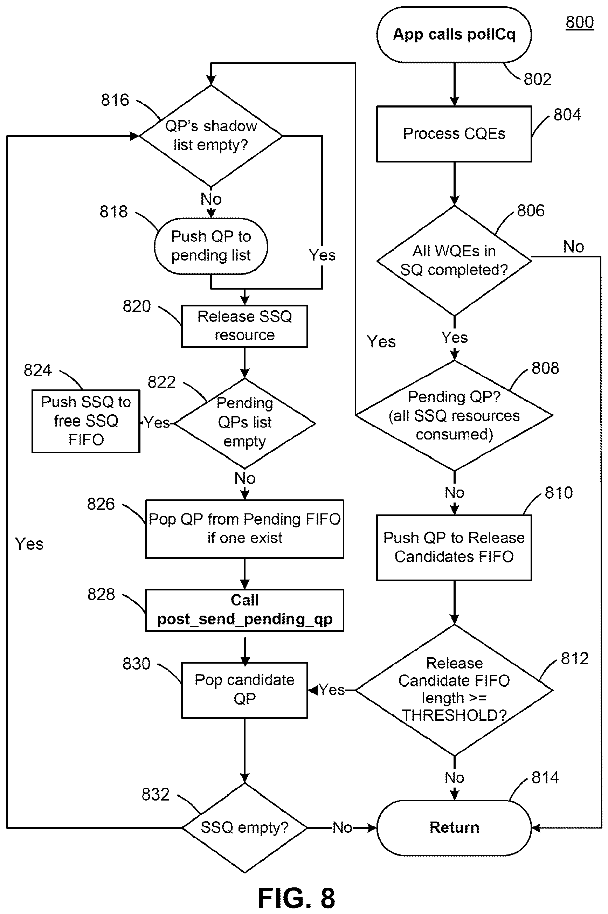

In some embodiments, the RNIC allocates the SSQ resource for the first time when the WRs are posted to the QP 156. When such SSQ, which is allocated to this QP 156, becomes empty, the user library does not immediately release the resource upon posting completion for the last WQE of the QP 156. The user library can add the QP 156 to the list of release candidates in FIFO. The user library can update QP information "qp_info" (e.g., information and attributes associated with the QP 156) to indicate the QP 156 is positioned in the FIFO. More QPs 156 may be added to the FIFO release candidates. When the FIFO of release candidates includes more than a configured number of the candidate QPs 156 (e.g., sixteen QPs 156), each time a QP 156 reaches the empty SSQ state (e.g., a call to pollCq operation for the last WQE, see method 800 in FIG. 8), the user library can remove the first QP 156 from the FIFO release candidates. The user library can then check if the SSQ of the candidate QP 156 is still empty and if it is still empty, the user library can release the SSQ resource, push the SSQ resource to the free SSQ FIFO, and update the "qp_info" to indicate that the QP 156 no longer owns the SSQ resource.

In some embodiments, the release candidate FIFO stays at or below the configured threshold (e.g., sixteen), and resource is freed and available to use upon reaching the threshold. In some embodiments, when a candidate QP 156 is removed from the queue, the QP 156 may have a new work and the SSQ for the QP 156 is not empty. No further operations are performed in such scenario. Effectively one QP 156 is popped (or pulled from the release candidates FIFO), and one QP 156 is pushed to the release candidates FIFO, while a resource may or may not be freed.

In some embodiments, when all resources are consumed and more QPs 156 require an SSQ resource, the user library can skip pushing a QP 156 to release candidates FIFO and the user library can almost immediately release the resource to the free FIFO. When reaching the state where all resources are consumed, the candidate FIFO can be emptied first.

A reference is now made to global pools for the IRRQ 152. In some embodiments, a configuration parameter determines the size of each ORRQ 154. A driver creates pools for a configured number of IRRQ entries and sets a pointer to the pool in an RNIC register. In some embodiments, the RNIC manages consumption of IRRQ entries and uses a content addressable memory (CAM) to locate the next entry to respond to when a QP responder is scheduled for transmission. The CAM lookup is based on pfid, qpid, irrq_idx variables, where the irrq_idx is the current producer index of the IRRQ 152 for the QP 156.

The system 200 can perform read or atomic initiator side operation. The peer that receives the request may have no IRRQ entries to store the request and can send the RNR having a specified time for retry operation. When the RNR is received, the QP timer can start and at expiration of the timer, the QP 156 can be pushed to the transmit scheduler to schedule the QP for service. The requester can increment a "read RNR received" counter. When the QP 156 is scheduled after the RNR, retransmission initiates the read or atomic request and other requests that are positioned after it.

In some embodiments, read or atomic initiator side operations can be performed on the responder side of an SRC QP. A QPC state and chip state relevant to these operations can include the following. A pending_irrq flag is used for QPC, indicating the QP 156 received a read or atomic request and responded with the RNR because of the lack of the IRRQ resource. The pending_irrq is set when the RNR is sent because of the lack of the IRRQ resource. The pending_irrq is cleared when the QP 156 can allocate a resource. A pending_response_bytes is a QPC count of the number of pending response bytes for incoming read requests on the QP 156. The pending_response_bytes is incremented when read request based on the read size is received and decremented by the size of the packet when each response packet is transmitted. A num_awaiting_irrq_cnt is an RNIC counter indicating the number of QPs 156 which responded to with the RNR to the read request. The num_awaiting_irrq_cnt is incremented when a QP 156 attempts for the first time to allocate an IRRQ 152 and fails, e.g., when pending_irrq changes the status from "clear" to "set". The num_awaiting_irrq_cnt is decremented when a QP 156 with pending_irrq set can allocate the IRRQ 152.

The reference is now made to obtaining a free IRRQ entry. When the read or atomic request is made, the RNIC attempts to allocate an IRRQ entry to store the request information. If allocation succeeds, the QPC pending_response_bytes is incremented by the size of the read request. If the free IRRQ 152 is not available, the responder sends the RNR with the packet sequence number (PSN) of the incoming read or atomic request having a retry timer value, or if the QP 156 has pending responses, then the pending_NAK is set and the RNR NAK can be sent once all pending responses have been sent. The RNIC then discards all incoming requests until receiving the request again. A QP flag, e.g., the pending_irrq, is set, and if the QP flag is cleared, the num_awaiting_irrq_cnt is incremented. In some embodiments, the responder increments a "read RNRs sent" counter.

In some embodiments, the RNR SYNDROME can have the following fields: bit 7 corresponding to 0; bits 6:5 corresponding to 01 (RNR code); bits 4:0 corresponding to a configured time for read RNR. The default RNR retry timer is set by the application in a "modify QP" field. The RNIC may use the default or higher value up to the maximum of 0xb11111.

In some embodiments, for QPs 156 having pending incoming read requests, the RNR NAK may not be sent immediately and is stored in QPC pending NAK information. In some embodiments, the NAK is sent when all responses to all currently pending read requests are sent. Until then, all incoming requests on the QPs 156 are discarded, including the non-read requests.

A reference is now made to freeing the IRRQ entry by the RNIC hardware. The RNIC frees IRRQ entry when the IRRQ 152 is no longer in use. Sending the last response for a read or atomic request qualifies as such event when the IRRQ 152 is no longer in use.

In some embodiments, each process on a host has its own pool of the SSQ, and the ORRQ structures of a configured size. All QPs 156 have a full RC context and support all RC operations. As described above, the IRRQ and ORRQ pointers in the QPC can be invalid. In some embodiments, the SSQ_ID can be invalid. A combined table of SSQ, and ORRQ 154 is allocated when needed (for example, when the WQEs are posted) and can be released when the WQEs of the SSQ are completed. The allocation and release can be performed under the user library control.

In some embodiments, a pool of SSQs is generated and the QP 156 is created. As part of a create_src_qp operation, the QP 156 is created in a typical manner but with an invalid IRRQ 152, ORRQ 154, and SSQ pointer (SSQ_ID) fields. When the QP 156 is created, a create_src_qp operation of the user space checks if the number of the SSQ resources created by that time is below a configured threshold for the number of the SSQs per process. If such condition is met, a new pinned pool of the SSQs of a configured size is created with a page buffer list (PBL) 153 for the SSQ. The new pinned pool of the SSQs stores the index of the SSQ in a free SSQ FIFO maintained by the user library under each process.

In some embodiments, the driver creates a translation table per process in the kernel space and the pointer to the table is programmed to the RNIC. When the SSQ is created, the driver allocates pages, pins the pages, and map the pages to the user space. The driver places a translation of the user space address to a physical address in the table and returns the index to the table to the create_src_qp function. The index to the table is used when attaching an SSQ resource to a QP 156.

FIG. 6 illustrates a flow diagram of a method 600 to handle a WR posted to a QP 156. In some embodiments, the method 600 can handle the WR from an application, the method 600 can check if a free SSQ is available, and the method 600 can post the request to the SSQ or store the request until the free SSQ is available. In some embodiments, the QP 156 is created with an invalid SSQ pointer (SSQ_ID). At step 602, the method 600 is initiated with an application calling ibv_post_send operation. When the method 600 posts WR by calling ibv_post_send operation, an SSQ can be required. When the WR is posted, the ibv_post_send operation checks if the QP 156 has an attached SSQ. At step 604, the method 600 determines whether the SQ 157 is attached. If this condition is met, then the operations proceed to post the WQEs to the SSQ, and the DB is rung on the SSQ_ID. For example, at step 606, the method 600 checks if all SSQ resources are consumed and there are still pending QPs 156. If not all SQ resources consumed or there are no pending QPs 156, then at step 612, the method 600 can generate the WQE for each WR and write the WQE to the SSQ. At step 614, the method 600 can ring DB and return.

If the condition at step 606 is met, e.g., if all SQ resources are consumed and there are still pending QPs 156, then at step 608, the method 600 determines if the last posted WQE was signaled. If the last posted WQE was signaled, then, at step 610, the method 600 stores the WRs in a shadow SQ and returns. If the last posted WQE was not signaled, then at step 612, the method 600 can generate the WQE for each WR and write the WQE to the SSQ. At step 614, the method 600 can ring DB and return.

If it is determined at step 604 that the QP 156 does not have an attached SSQs, the ibv_post_send function attempts to allocate the pinned pool of the SSQs from its free pool of the SSQs. For example, at step 616, the method 600 determines if an SQ resource is available. If the SQ resource is available, at step 618, the method 600 pops a free SSQ resource index. At step 620, the method 600 posts an "attach SSQ" WQE. At step 622, the method 600 generates the WQE for each WR and write the WQE to SSQ. At step 614, the method 600 can ring DB and return.

If allocation is not successful because of, for example, the absence of free resources, the method 600 stores the WR in the shadow SQ of the QP 156 for future use (step 624). At step 626, the method 600 pushes the QP 156 to a pending FIFO (e.g., the FIFO of the pending QPs 156 maintained by the user library) if the QP 156 is not already in the pending FIFO and returns.

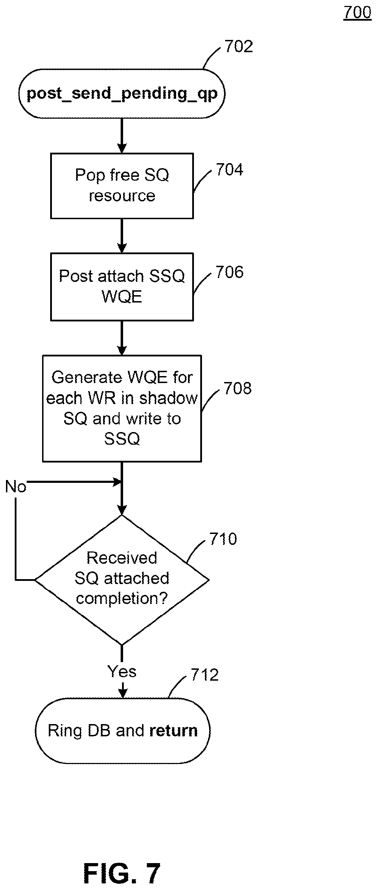

FIG. 7 is a flow diagram of a method 700 to allocate and attach SSQ to a pending QP 156 and post the WR into the SSQ. In some embodiments, the method 700 can post WRs that were previously stored in a shadow queue into a newly allocated SSQ (because, e.g., the free SSQ was not available in the method 600). The method 700 can start with post_send_pending_qp operation at step 702. For example, the method 800 can call the method 700 by sending a command post_send_pending_qp. At step 704, the method 700 can pop a free SQ resource. At step 706, the method 700 can post "attach SSQ" WQE. At step 708, the method 700 can generate WQE for each WR in the shadow SQ and write the WQE to the SSQ. In some embodiments, the list of the WRs in the call is processed, a WQE for each WR is generated, and the WQE is written to the newly allocated SSQ. In some embodiments, the methods 600 and 700 update the shadow SQ of the QP 156 indicating that the QP 156 has an attached SSQ with the SSQ_ID.

At step 710, the method 700 determines if the "SQ attached completion" communication was received. The "No" feedback loop indicates that until the "SQ attached completion" communication is received, the method 700 does not progress forward to the next step 712. At step 712, the method 700 rings the DB and returns when the "SQ attached completion" communication is received. For example, the DB of the SSQ_ID is rung with the producer index according to the number of the generated WQEs.

To reduce or avoid starvation of some QPs 156, the ibv_post_send operation changes the behavior under stressful conditions. When all SSQ resources are consumed and there are QPs 156 awaiting the SSQ resources, the system 200 stops generation of WQE for QPs 156 that own a resource if the last WQE generated and posted to the SSQ resource was signaled and additional WRs are stored in the shadow SQ of the QP 156. Under such conditions when a QP 156 that owns a resource generates the last CQE, then a pollCq releases the SSQ resource almost immediately without pushing the QP 156 to the FIFO of the release candidates.

FIG. 8 illustrates a flow diagram of a method 800 to release the SSQ resource and process the WR for pending QPs 156. In some embodiments, the method 800 can release an SSQ to the free pool, the method 800 can check if there are connections awaiting an SSQ resource, and the method 800 can initiate allocation of the SSQ to the next awaiting connection if there are connections awaiting the SSQ resource. At step 802, the application calls pollCq operation. For each call made by the process to the pollCq operation, the pollCq operation checks if the completion is performed with respect to the last outstanding WQE. If it is performed, then at step 804, the method 800 processes CQEs. In some embodiments, the pollCq operation processes the CQE and pushes the QP 156 to the FIFO of the release candidates. For example, at step 806, the method 800 determines if all WQEs in SQ 157 are completed. If this condition is met, then at step 808, the method 800 determines if there are pending QPs 156 (e.g., whether all SSQ resources are consumed). If there are no pending QPs 156 (e.g., not all SSQ resources consumed), then at step 810, the method 800 pushes the QP 156 to release candidates FIFO. At step 812, the method 800 determines if the length of the release candidate FIFO is equal or greater than a threshold. If the length of the release candidate FIFO is less than a threshold, then at step 814, the method 800 returns.

If the release candidates FIFO has a configured number of QPs 156 (e.g., sixteen), the first QP 156 is popped (e.g., pulled from the queue). If the SSQ of the QP 156 is empty, then the SSQ resource of that QP 156 is released and either pushed to the free resource FIFO or assigned to the QP 156 popped (or removed) from the pending list. At step 816, the method 800 determines if the QP shadow list is empty. If the QP shadow list is not empty then at step 818, the method 800 pushes the QP 156 to the pending list. The QP 156 may have the WQEs in the shadow QP if all SSQs were consumed and the user library posted additional WRs to the shadow QP instead of posting the additional WRs to the SSQ attached to the QP 156.

If the QP shadow list is empty then at step 820, the method 800 releases the SSQ resource. For example, at the time of releasing the SSQ, the shadow QP is checked for emptiness and if the shadow QP contains WQEs, then the QP 156 is pushed to the pending list. Releasing the attached SSQ can, for example, involve only the user library and not the RNIC hardware. At step 822, the method 800 determines if a list having the pending QPs is empty. At step 824, the method 800 pushes the SSQ to free the SSQ FIFO if the list having the pending QPs is empty. For example, the resource SSQ_ID can be pushed to the free SSQ resource FIFO. In some embodiments, the pollCQ operation checks if there are pending QPs 156, and if so, the pollCq operation pops the first pending QP 156 and calls the post_send_pending_qp operation (e.g., the method 700). If the condition of step 822 is not met, then at step 826, the method 800 pops the QP 156 from the pending FIFO if such QP 156 exists. For example, an SSQ resource can be popped from the free SSQ FIFO and be attached to the pending QP 156. At step 828, the method 800 calls the post_send_pending_qp operation and the method 700 can be performed. For example, the post_send_pending_qp operation can then retrieve each of the WRs from the shadow SQ of a pending QP 156, generate a WQE and write the WQE to the allocated SSQ. At step 830, the method 800 pops the candidate QP 156. At step 832, the method 800 checks if the SSQ of the popped candidate QP 156 is still empty. If the SSQ of the popped candidate QP 156 is empty, the method 800 proceeds to step 816 and perform the operations described above. Otherwise, if the SSQ of the popped candidate QP 156 is not empty, the method 800 returns (step 814).

A reference is now made to validations and error handling. In some embodiments, when the RNR to a read or atomic request is received, the regular "SQ RNR retry" counter is not decremented, but a new "read RNR retry" can be decremented. The "read RNR retry" initial value is configurable and can accept values of up to 256. When the handling of the "read RNR retry" exceeded (e.g., when the counts reach zero (0)), the operation is substantially the same as when regular "SQ RNR retry" exceeded and results in the QP 156 moving to an error state. An operation of the "read RNR retry" that exceeded completion is posted for the WQE.

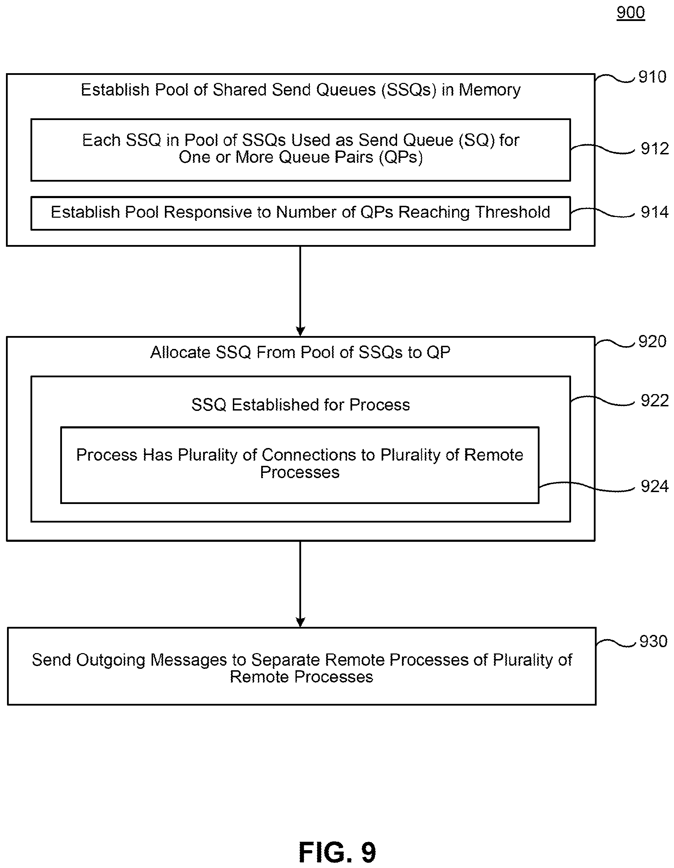

Fig. 9 is a flowchart of a method process 900 to establish in the memory a pool of shared send queues (SSQs), allocate the SSQ to one or more QPs 156, and send outgoing messages. In some implementations, one or more steps or blocks of Fig. 9 may be performed by the system 200.

As shown in Fig. 9, method 900 includes establishing, by one or more processors in memory, a pool of shared send queues (SSQs) (block 910). The system 200 establishes, by one or more processors in memory, a pool of shared send queues (SSQs), each SSQ in the pool of SSQs to be used as a send queue (SQ) 157 for one or more queue pairs (QPs) 156, as described above (block 912).

The method 900 may include additional implementations, such as any single implementation or any combination of implementations described below or in connection with one or more other processes described elsewhere herein. A first implementation, method 900 may include establishing the pool responsive to a number of queue pairs (QPs) 156 reaching a threshold (block 914).

As shown in Fig. 9, method 900 includes allocating, by the one or more processors, an SSQ from the pool of SSQs to a QP 156 (block 920). The system 200 allocates the SSQ to the QP 156 established for a process (block 922). The process has a plurality of connections to a plurality of remote processes (block 924).

As shown in Fig. 9, method 900 includes sending outgoing messages to separate remote processes of the plurality of remote processes (block 930).

Although Fig. 9 shows example blocks of method 900, in some implementations, method 900 may include additional blocks, than those depicted in Fig. 9. Two or more of the blocks of method 900 may be performed in parallel.

The term "configured to" can refer to the functional capability of a system or device to perform a specific operation or set of steps. For example, a general-purpose processor or a specialized processor can have a structure, hardware, or software to enable the specified functionality. For example, a general-purpose processor can run software that causes the described steps to occur. Furthermore, specialized processors or specially implemented processors can be designed or adapted to carry out the specified tasks.

The following IEEE standard(s), including any draft versions of such standard(s), are hereby incorporated herein by reference in their entirety and are made part of the present disclosure for all purposes IEEE 802.3, IEEE 802.11x, IEEE 802.11ad, IEEE 802.11ah, IEEE 802.11aj, IEEE 802.16 and 802.16a, and IEEE 802.11ac. In addition, although this disclosure may reference aspects of these standard(s), the disclosure is in no way limited by these standard(s).

## Claims

1. A method (900) for remote direct memory access, RDMA, comprising:
setting (910), by one or more processors in memory, a pool of shared send queues, SSQs;
wherein each SSQ in the pool of SSQs is shared between one or more queue pairs, QPs, and is configured to be used (912) as a send queue, SQ, (157) for the QPs;
allocating (920), by the one or more processors, at least one of SSQs from the pool of SSQs to one QP (156) out of the QPs;
wherein the SSQ is allocated to a QP of (922) a process having (924) a plurality of connections to a plurality of remote processes; and
sending (930) by the SSQ, via the plurality of connections, outgoing messages to separate remote processes of the plurality of remote processes.

2. The method (900) of claim 1, wherein setting (910) the pool is responsive to a first number of the QPs reaching an upper threshold (914).

3. The method (900) of any one of the preceding claims, wherein the pool of SSQs is pinned in the memory.

4. The method (900) of any one of the preceding claims, wherein the SSQ is used as the SQ (157) for at least one QP (156) instead of an individual SQ for each QP.

5. The method (900) of any one of the preceding claims, wherein the system uses a pool of incoming read request queues, IRRQs (152), and the SSQ uses a corresponding outgoing read request queue, ORRQ (154).

6. The method (900) of any one of the preceding claims, wherein the QP (156) is set to have a pointer to the SSQ in the pool of SSQs.

7. The method (900) of any one of the preceding claims, wherein the SSQ is released by the QP (156) responsive to identifying that the SQ (157) of the QP (156) is empty.

8. A system comprising: one or more processors, coupled to memory, the processor configured to control and/or carry out a method (900) as set forth in any one of the preceding claims.

9. A non-transitory computer-readable medium comprising instructions that, when executed by one or more processors of a system, cause the system to carry out the method (900) of any of claims 1 to 7.

## Patentansprüche

1. Ein Verfahren (900) für Remote Direct Memory Access, RDMA, aufweisend:
Einstellen (910), durch einen oder mehrere Prozessoren in einem Speicher, eines Pools von gemeinsam genutzten Sendewarteschlangen, SSQs;
wobei jede SSQ in dem Pool von SSQs zwischen einem oder mehreren Warteschlangenpaaren, QPs, gemeinsam genutzt wird und konfiguriert ist, um als eine Sendewarteschlange, SQ, (157) für die QPs verwendet zu werden (912);
Zuweisen (920), durch den einen oder die mehreren Prozessoren, mindestens einer der SSQs aus dem Pool von SSQs zu einem QP (156) aus den QPs;
wobei die SSQ einem QP (922) eines Prozesses zugewiesen wird, der eine Mehrzahl von Verbindungen zu einer Mehrzahl von Remote-Prozessen aufweist (924); und
Senden (930), durch die SSQ, über die Mehrzahl von Verbindungen, von ausgehenden Nachrichten an separate Remote-Prozesse der Mehrzahl von Remote-Prozessen.

2. Das Verfahren (900) nach Anspruch 1, wobei das Einstellen (910) des Pools als Reaktion darauf erfolgt, dass eine erste Anzahl der QPs einen oberen Schwellenwert erreicht (914).

3. Das Verfahren (900) nach einem der vorhergehenden Ansprüche, wobei der Pool von SSQs in dem Speicher gepinnt ist.

4. Das Verfahren (900) nach einem der vorhergehenden Ansprüche, wobei die SSQ als die SQ (157) für mindestens ein QP (156) anstelle einer individuellen SQ für jedes QP verwendet wird.

5. Das Verfahren (900) nach einem der vorhergehenden Ansprüche, wobei das System einen Pool von eingehenden Leseanforderungswarteschlangen, IRRQs (152), verwendet und die SSQ eine entsprechende ausgehende Leseanforderungswarteschlange, ORRQ (154), verwendet.

6. Das Verfahren (900) nach einem der vorhergehenden Ansprüche, wobei das QP (156) so eingestellt ist, dass er einen Zeiger auf die SSQ in dem Pool von SSQs aufweist.

7. Das Verfahren (900) nach einem der vorhergehenden Ansprüche, wobei die SSQ durch das QP (156) als Reaktion auf das Identifizieren, dass die SQ (157) des QP (156) leer ist, freigegeben wird.

8. Ein System, aufweisend: einen oder mehrere Prozessoren, die mit einem Speicher gekoppelt sind, wobei der Prozessor konfiguriert ist, um ein Verfahren (900) wie in einem der vorhergehenden Ansprüche dargelegt zu steuern und/oder auszuführen.

9. Ein nicht-transitorisches computerlesbares Medium, das Anweisungen aufweist, die, wenn sie durch einen oder mehrere Prozessoren eines Systems ausgeführt werden, das System veranlassen, das Verfahren (900) nach einem der Ansprüche 1 bis 7 auszuführen.

## Revendications

1. Procédé (900) d'accès direct à distance à la mémoire, RDMA, comprenant les étapes consistant à :
définir (910), par l'intermédiaire d'un ou plusieurs processeurs en mémoire, un groupe de files d'attente d'envoi partagées, SSQ ;
dans lequel chaque SSQ dans le groupe de SSQ est partagée entre une ou plusieurs paires de files d'attente, QP, et est configurée pour être utilisée (912) comme une file d'attente d'envoi, SQ, (157) pour les QP ;
attribuer (920), par l'intermédiaire des un ou plusieurs processeurs, au moins une des SSQ du groupe de SSQ à une QP (156) parmi les QP ;
dans lequel la SSQ est attribuée à une QP de (922) un processus ayant (924) une pluralité de connexions à une pluralité de processus distants ; et
envoyer (930) par l'intermédiaire de la SSQ, via la pluralité de connexions, des messages sortants pour séparer des processus distants de la pluralité de processus distants.

2. Procédé (900) selon la revendication 1, dans lequel un réglage (910) du groupe est sensible à un premier nombre des QP atteignant un seuil supérieur (914).

3. Procédé (900) selon l'une quelconque des revendications précédentes, dans lequel le groupe de SSQ est épinglé dans la mémoire.

4. Procédé (900) selon l'une quelconque des revendications précédentes, dans lequel la SSQ est utilisée en tant que SQ (157) pour au moins une QP (156) au lieu d'une SQ individuelle pour chaque QP.

5. Procédé (900) selon l'une quelconque des revendications précédentes, dans lequel le système utilise un groupe de files d'attente de demande de lecture entrantes, IRRQ, (152), et la SSQ utilise une file d'attente de demande de lecture sortante correspondante, ORRQ, (154).

6. Procédé (900) selon l'une quelconque des revendications précédentes, dans lequel la QP (156) est définie pour présenter un pointeur vers la SSQ dans le groupe de SSQ.

7. Procédé (900) selon l'une quelconque des revendications précédentes, dans lequel la SSQ est libérée par la QP (156) en réponse à l'identification que la SQ (157) de la QP (156) est vide.

8. Système comprenant : un ou plusieurs processeurs, couplés à une mémoire, le processeur étant configuré pour commander et/ou mettre en œuvre un procédé (900) selon l'une quelconque des revendications précédentes.

9. Support non transitoire lisible par ordinateur comprenant des instructions qui, lorsqu'elles sont exécutées par un ou plusieurs processeurs d'un système, amènent le système à mettre en œuvre le procédé (900) selon l'une quelconque des revendications 1 à 7.
